Europäisches Patentamt

European Patent Office

Office européen des brevets

(11) Publication number: **0 166 600**
A2

(12) **EUROPEAN PATENT APPLICATION**

(21) Application number: **85304509.4**

(22) Date of filing: **25.06.85**

(51) Int. Cl.⁴: **A 23 L 3/38**, A 23 B 7/02

(30) Priority: **26.06.84 US 624632**

(43) Date of publication of application: **02.01.86**
**Bulletin 86/1**

(84) Designated Contracting States: **DE FR GB SE**

(71) Applicant: **GENERAL FOODS CORPORATION, 250 North Street, White Plains, N.Y. 10625 (US)**

(72) Inventor: **Nasrallah, Maurice, 218, Gordon Avenue, North Tarrytown New York 10951 (US)**
Inventor: **Anelich, Mario Anthony, 63, Merritt Avenue, Dumont New Jersey 07628 (US)**

(74) Representative: **Baillie, Iain Cameron et al, c/o Ladas & Parry Isartorplatz 5, D-8000 München 2 (DE)**

(54) **Method for producing freeze-dried strawberry slices.**

㊐ A process for producing freeze-dried strawberries slices comprising: partially freezing strawberries for a time and at a temperature effective to freeze 25% to 45% of the free water and to substantially rupture its cellular structure; slicing the partially frozen strawberries; completely freezing the sliced strawberries and then freeze-drying same to a final moisture of about 3%.

ACTORUM AG

Case 3313

DESCRIPTION

METHOD FOR PRODUCING FREEZE-DRIED STRAWBERRY SLICES

FIELD OF INVENTION

The present invention relates to a process for producing freeze-dried strawberry slices. More particularly, this invention relates to a process for producing freeze-dried strawberry slices which are capable of rehydration in milk or other liquids within 3 minutes, while maintaining flavor, texture, and structural integrity.

BACKGROUND OF THE INVENTION

It has always been difficult to dehydrate foods by conventional drying methods due to the tendency of certain foods to lose texture, flavor, and appearance during drying. This is particularly true of fruits. The advent of freeze-drying wherein the water content of a material is removed by sublimation has made it possible to dehydrate while still retaining its desirable appearance and flavor qualities. Freeze-dried fruit generally rehydrates quite rapidly in water. However, in the case where rehydration is to be accomplished in the presence of milk, the rehydration time has been found to be quite slow, thus, rendering the fruit unsuitable for incorporation in the dried form with another food material,

0166600

- 2 -

i.e., a dry cereal such as corn flakes, bran flakes, or wheat flakes, all of which are normally consumed with milk. Due to the slow rate of rehydration, the cereal will be found to lose its desirable crispness and becomes mushy during the long time necessary for a reconstitution of the fruit. If the cereal is eaten before full rehydration or reconstitution of the fruit has been achieved, then the cereal will be crisp but the fruit will have an undesirable texture characterized by a dry or cottony mouthfeel. However, the rehydration rate in milk cannot be made too rapid or the fruit will lose its texture, and although the cereal will still be crisp, the fruit will be found to become mushy.

U.S. Patent No. 3,395,022 by Vollink, et al. discloses a process for solving the problems above. In this process, fresh whole strawberries were slowly frozen to 0°F and held for a period of 18 hours. The frozen strawberries were then tempered to 25°F for 4 hours. The tempered stawberries were then sliced to a desired specification, then quickly refrozen in dry ice. The product was then freeze-dried to a desired moisture content. The dried strawberries rehydrated between 1 and 1½ minutes in milk or other liquids. However, after holding for 10 minutes the texture of the strawberries was soft and/or slightly mushy.

The process disclosed above is very time consuming, that is, it requires about 25 hours of processing time before the product is freeze-dried. This batch process is labor intensive and requires a large capital cost.

The following patents are of general interest, hence, worthwhile mentioning:

U.S. Patent No. 3,467,530 by Scharschmidt, et al. discloses a process for preparing a readily hydratable dehydrated blueberry comprising; freezing the blueberries, puncturing the integument and core portion of the frozen blueberry, and freeze-drying the punctured berry to a moisture content of less than about 10%.

U.S. Patent No. 4,002,772 by Haas discloses that, cellular food materials such as fruits, have been found to possess relatively soft textures when they are frozen while under gas pressure of greater than about 50 psi. This pressure freezing treatment renders to foodstuff more permeable and porous, resulting in a product that can be dehydrated and rehydrated more quickly.

The object of the present invention is, therefore, a method for producing freeze-dried strawberries capable of rehydrating in liquids such as milk within a period of 1 to 3 minutes.

Another object of the present invention is a freeze-dried strawberries that maintains their flavor, texture and structural integrity upon rehydration.

A further object of the present invention is to deliver free-flowing, non-sticky strawberry slices.

Still a further object of the invention is to produce a frozen strawberry slice in a continuous manner to be freeze-dried thereby reducing the manual labor and capital cost involved therewith.

SUMMARY OF THE INVENTION

The present invention is concerned with a process for freeze-drying strawberries comprising the steps of: slowly and partially freezing strawberries for a time and at a temperature effective to produce a frozen

- 4 -

water content of 25 to 45% by weight of the free water, said frozen water having ice crystals of sufficient size to substantially rupture the cellular structure of the strawberries; slicing the partially frozen strawberries; rapidly freezing the sliced strawberries for a time, and at a temperature effective to freeze the remaining free water promoting flowability and minimizing stickiness between slices; and freeze-drying said frozen, sliced strawberries to a final moisture of about 3%.

## DETAILED DESCRIPTION

Before proceeding to a more detailed description of the invention, it is necessary to define some relevant terms.

The term "freeze-drying" as used in this invention signifies drying by sublimation, preferably under a high vacuum, so that the frozen ice crystals (both large and small) are removed from the strawberries by vaporization from the solid state as distinguished from the liquid or semi-solid state.

"Slow freezing" according to this invention, generally involves transforming the moisture in the strawberries into a growth of large ice crystals over a period of at least 1 hour and preferably 1.5 to 2.0 hours, in order to expand and partially rupture the cellular walls or tissues of the strawberries. This mode of freezing is to be distinguished from normal or "rapid freezing" methods, wherein the water content of the strawberries is frozen over a period of several seconds to several minutes to form a large number of minute ice crystals which do not rupture or expand the cellular tissues of the strawberries.

When slow freezing, the freshly picked strawberries are subjected to freezing before they have time to deteriorate in flavor and quality. Whole strawberries are frozen to prevent the juice and texture loss wich occurs when cutting strawberries in the unfrozen state. The strawberries may then be cut after the partial freezing operation and prior to the second freezing step. The natural moisture content of the strawberries is in the range of about 80 to 90% and substantially all of this moisture must be completely frozen prior to freeze-drying.

The strawberries according to the present invention are partially frozen for a time and at a temperature effective to create a frozen water fraction of 25% to 45% by weight of the free water, preferably from 30% to 40%. To achieve this frozen water fraction, the strawberries are frozen to a temperature ranging from 16 to 32°F and preferably from 20 to 28°F. The time required to achieve the above frozen fraction ranges from between about 60 minutes and 120 minutes and preferably between 80 minutes and 100 minutes. This corresponds to a freezing load of about 40 to 60 btu per pound of freezable water (unbound water). Partial freezing may be accomplished by known methods of freezing. It is preferably accomplished by subjecting the strawberries in an air blast freezer to a stream of cold air having a temperature ranging from 10°F to 29°F and preferably about 20°F, and said air traveling at a velocity of 100 to 600 ft per minute and preferably from about 200 to 300 ft. per minute.

Regardless of the freezing method used to partially freeze the strawberries, it is essential that the water content be frozen over a sufficiently long period to develop large ice crystals. These large crystals will, in turn, substantially rupture the cellular structure causing large pores or channels to be formed which will increase the porosity, water removal rate during freeze-drying and the final rate of rehydration. The size of these large ice crystals are generally within the range of 100 to 300 microns. In cases where small ice crystals are developed the cellular structure of the tissue do not rupture or expand. In this case very few pores are created, hence, decreasing the rate of rehydration.

Another purpose of partial freezing is to prevent juice and texture loss due to cutting the strawberries in the unfrozen state. This freezing substantially binds the free water, decreasing its availability upon cutting.

A temperature profile in freezing the strawberries will show a gradual descending cooling curve from room temperature down to the point where moisture content of the strawberries begins to form ice crystals. At this point, the temperature curve will level into a plateau and remain at this temperature until 25% to 45% and preferably 30% to 40% of the free water crystallizes. It is essential in the present invention that the frozen water content of the partially frozen fruit does not exceed 45%, of the free water. If this occurs, too many large ice crystals are formed, resulting in a product that is very difficult to slice and shatters upon impact with a slicer. The resultant cell structure of the strawberries would be substantially destroyed resulting in the final dried product having a soft and/or slightly mushy texture upon rehydration. Comparatively, if the frozen water content is less than 25% of the free water, the time required to substantially rehydrate the freeze-dried strawberries would increase beyond the desired 2-3 minutes.

Furthermore, partially freezing the strawberries to too low a temperature or at too fast a rate causes non-uniform freezing wherein the outer portion of the strawberries, namely the casing becomes hard, causing fragmentation upon slicing. Also, if the strawberries are allowed to freeze to too low a temperature during partial freezing an additional tempering step would be required for equilibration of the strawberries prior to slicing as in Vollink et al. This additional freeze thaw cycle would further deteriorate the cell structure, thus creating softer and less desirable texture upon rehydration.

Suitably, the partially frozen strawberries are sliced to a thickness ranging from 1/8 inch to 3/8 inch and preferably from 3/16 inch to 1/4 inch.

The sliced strawberries are then rapidly frozen for a time and at a temperature effective to freeze substantially all of the remaining free water in the strawberries, i.e., to an overall frozen fraction of at least 75 to 90% by weight of the free water and preferably from 80 to 85%. To freeze substantially all of the remaining free water, the strawberries are frozen to a temperature ranging from 0°F to -10°F and preferably from 0°F to -5°F. It is preferred, for efficiency purposes to individually quick freeze (IQF) the strawberry slices in a fluidized air blast freezer wherein the air velocity is about 600 to 1200 ft. per minute, preferably 1000 ft. per minute, and wherein the air has a temperature of about -10°F to about -40°F, preferably from about -15°F to about -30°F, for a time ranging from 5 to 20 minutes, preferably from 10 to 15 minutes. This IQF treatment facilitates flowability and will minimize stickiness between slices.

This rapid freezing of the strawberry slices develops small ice crystals as the remaining free water is frozen. These small crystals will cause small or no pores to be formed, having little or no effect on the final structure upon rehydration. These small ice crystals also have little or no effect on the cell structure. The degree of cell destruction is dependent on only the initial slow freezing step of the whole strawberry, whereby large ice crystals are created which rupture the cell structure. The degree of rupture is a direct relationship to the amount of water frozen in the slow freezing step. The more rapid second freezing step has no real effect on the structure because only small ice crystals are formed. Therefore, it is believed that the final product has about 40% of its cells destroyed due to the formation of large ice crystals while the remaining 60% remains substantially intact.

The frozen strawberries are then freeze-dried by any known commercial means, wherein the ice crystals are sublimed under vacuum until a terminal moisture content of 1% to 5%, and preferably about 3% is obtained. The sublimed large ice crystals, due to their size, leave large channeled openings in the strawberries as the crystals vaporize, thereby enable quicker penetration when exposed to a rehydrating medium.

When this dried product is rehydrated, the rate of rehydration is about as rapid as a strawberry with greater porosity, i.e., where substantially all the cells are destroyed. The texture of the strawberry slices of this invention with about 60% of its cells remaining intact is far superior to freeze-dried strawberry slices with most of the cells destroyed. These new strawberry slices will maintain their

0166600

- 9 -

structural integrity and texture upon rehydration, whereas strawberry slices with all the cells destroyed is softer and has a less desirable mushy texture.

The dry strawberry slices can be consumed as is or may be combined with a dry breakfast cereal food such as corn flakes or other rehydratable products adapted to be consumed with milk or cream. However, the strawberry slices of this invention due to their extreme porosity are extremely hygroscopic. The dried strawberry slices, therefore, should be protected from atmospheric and in-package moisture and at no time should the moisture content be allowed to exceed about 4%.

The following Example is presented to further illustrate the invention but it is to be understood that the invention is not limited to the details of this Example.

### EXAMPLE 1

A charge of freshly picked strawberries were washed and then graded for uniformity. Strawberries having a size of about 5/8 to 1 1/2 inch in diameter were placed on a conveyor traveling through an air blast freezer exposing the strawberries for about 90 minutes to a stream of air having a temperature of about 20°F and traveling at a velocity of about 250 ft. per minute. The average temperature of the partial frozen strawberries exiting the freezer was about 28°F. During the above slow freezing process a frozen water fraction of about 40% by weight of the free water was achieved. The partially frozen whole strawberries were cut into 1/4 inch thick slices. The partially frozen strawberry slices were then fed to an IQF freezer i.e, fluidized blast air, to completely freeze the remaining free water in order to prevent stickiness between the slices during storage and to prepare for freeze drying. The average freezer temperature was about -20°F with air velocity of about 900 ft. per minute and the freezing time was about 12 minutes. The product had a final frozen water content of about 80% by weight of the freezeable water (both large and small) ice crystals. The strawberries were then freeze-dried by conventional means to a moisture content of about 3%.

The freeze-dried strawberry slices were then combined with cornflakes at a level of about 10% by weight strawberries and about 90% cornflakes. The blending operation was conducted in a packaging room having a relative humidity of 30% in a period of less than 10 to 15 minutes thereby limiting moisture pickup of the strawberries to less than 1%. The strawberry and cornflake mix was then packaged in a water resistant, wax laminated foil liner which was placed inside a chip board shell and then closed with a wax laminated over-wrap. The packaged product having a terminal moisture content of less than 2.5% for the strawberries and about 2% for the cornflakes was stored in this form at 70°F and 50% relative humidity for 3 to 6 months without any degradation of product quality. At the end of this period the strawberries were found to reconstitute in milk or cream in about 90 seconds to a flavor, texture and appearance close to that of fresh berries. The breakfast cereal could be eaten within 1½ to 3 minutes with the berries being fully reconstituted and maintaining their structural integrity while the cereal remained in its crisp form.

0166600

- 11 -

<u>CLAIMS</u>

1. A process for freeze-drying strawberries comprising the steps of:

    a. slowly and partially freezing strawberries for a time, and at a temperature effective to produce a frozen water content of 25 to 45% by weight of the free water, said frozen water content having ice crystals of sufficient size to substantially rupture the cellular structure of the fruit;

    b. slicing the partially frozen strawberries;

    c. rapidly freezing the sliced strawberries for a time, and at a temperature effective to freeze substantially all the remaining free water, promote flowability and minimize stickiness between slices; and

    d. freeze-drying the frozen sliced strawberries to a final moisture of about 1% to 4%.

2. A process according to claim 1 wherein the strawberries in Step 1a. are partially frozen by subjecting it to a stream of air said air having a temperature ranging from 10°F to 29°F.

3. A process according to claim 2 wherein the partial freezing air temperature is about 20°F.

4. A process according to claim 1 wherein the strawberries in Step 1a. are subject to partial freezing for a time ranging from 60 to 120 minutes.

5. A process according to claim 4 wherein the strawberries are subject to partial freezing for a time ranging from 80 to 100 minutes.

6. A process according to claim 1 wherein partial freezing is accomplished by subjecting the strawberries in an air blast freezer to a stream of cold air traveling at a velocity of 100 to 600 feet per minute.

7. A process according to claim 6 wherein the air is traveling at a velocity of 200 to 300 feet per minute.

8. A process according to claim 1 wherein the frozen water content ranges 30% to 40% by weight of the free water.

9. A process according to claim 1 wherein the frozen water of step 1a. has ice crystals generally within the range of from 100 to 300 microns in size.

10. A process according to claim 1 wherein the particulate piece of the sliced strawberries ranges from a 1/8 to a 3/8 inch thickness in at least one dimension.

11. A process according to claim 10 wherein the particulate pieces are from 3/16 to 1/4 inch thick in at least one dimension.

12. A process according to claim 1 wherein the remaining free water in the sliced partially frozen strawberries is frozen by subjecting them to a stream of air having a temperature ranging from -10°F to -40°F.

13. A process according to claim 12 wherein the remaining free water in the sliced strawberries is frozen by subjecting them to a stream of air having a temperature ranging from -15°F to -30°F.

14. A process according to claim 1 wherein the remaining free water in the sliced partially frozen strawberries is frozen for a time ranging from 5 to 20 minutes.

15. A process according to claim 14 wherein the remaining free water in the sliced strawberries is frozen for a time ranging from 10 to 15 minutes.

- 13 -

16. A process according to claim 1 wherein complete freezing is accomplished by subjecting the sliced strawberries in a fluidized air blast freezer to a stream of cold air traveling at a linear velocity ranging from 600 to 1200 ft. per minute.

17. A process according to claim 16 wherein the linear velocity is about 1000 ft. per minute.

18. A process according to claim 1 wherein the frozen water content after substantially freezing the sliced strawberries ranges from 75% to 90% of the free water.

19. A process according to claim 18 wherein the frozen water content after substantially freezing the sliced strawberries ranges from to 80-85% of the free water.

20. A process according to claim 1 wherein the final moisture content of the freeze-dried strawberries is about 3%.

21. Freeze-dried strawberry slices according to the process of claim 1.